# EUROPÄISCHE PATENTSCHRIFT

(11) **EP 2 078 138 B1**
(45) Veröffentlichungstag und Bekanntmachung des Hinweises auf die Patenterteilung: **10.08.2016**
(21) Anmeldenummer: 07817630.2
(22) Anmeldetag: 06.10.2007
(51) Int. Cl.: F01D 5/18, F01D 9/04, F01D 5/28

(54) **TURBINENSCHAUFEL EINER GASTURBINE**
TURBINE VANE OF A GAS TURBINE
AUBE DE TURBINE À GAZ

(30) Priorität: 14.10.2006 DE 102006048685
(43) Veröffentlichungstag der Anmeldung: 15.07.2009
(73) Patentinhaber: MTU Aero Engines AG, 80995 München (DE)
(72) Erfinder: ARRIETA, Hernan Victor, 35-302 Rzeszow (PL); KLEINSTÜCK, Rolf, 82110 Germering (DE); STORM, Paul, 85354 Freising (DE); WIEDEMANN, Peter, 86937 Scheuring (DE)
(86) Internationale Anmeldenummer: PCT/DE2007/001788
(87) Internationale Veröffentlichungsnummer: WO 2008/043340

(56) Entgegenhaltungen:
- EP-A- 1 013 883
- EP-A- 1 544 414
- WO-A-98/10174
- US-A- 4 121 894
- US-A- 6 077 036

## Beschreibung

Die Erfindung betrifft eine Turbinenschaufel einer Gasturbine, insbesondere eines Crasturbinenflugtriebwezks, gemäß dem Oberbegriff des Patentanspruchs 1.

Turbinenschaufeln einer Gasturbine, wie z.B. eines Gasturbinenflugtriebwerks, sind im Betrieb hohen Temperaturen und aggressiven Medien ausgesetzt, sodass dieselben zum Schutz an Oberflächen u.a. mit Wärmedämmschichten beschichtet werden. Aus der Praxis bekannte Turbinenschaufeln sind hierzu an einer äußeren Oberfläche ihres Schaufelgrundkörpers, der eine Saugseite und eine Druckseite der Turbinenschaufel bildet, mit einer eine konstante Schichtdicke aufweisenden Wärmedämmschicht beschichtet. Aus der Praxis bekannte Turbinenschaufeln sind demnach an der äußeren Oberfläche eines Schaufelgrundkörpers durchgehend mit Wärmedämmschichten versehen, die eine konstante und damit einheitliche Schichtdicke aufweisen.

In der US 6,077,036 wird vorgeschlagen, eine Turbinenschaufel, nämlich eine feststehende Leitschaufel einer Turbine, lediglich abschnittsweise bzw. bereichsweise mit einer Wärmedämmschicht zu beschichten, wobei sich nach der US 6,077,036 die Wärmedämmschicht über einen Abschnitt der Saugseite der Turbinenschaufel erstreckt und wobei der übrige Abschnitt der Saugseite sowie die Druckseite der Turbinenschaufel keinerlei Wärmedämmschicht tragen. Der Nachteil hierbei besteht darin, dass die Turbinenschaufeln an Grenzflächen zwischen den mit der Wärmedämmschicht beschichteten und unbeschichteten Abschnitten schnell beschädigt werden können.

Aus dem Dokument WO 98/10174 A sind Turbinenschaufeln mit einer Wärmedämmschicht bekannt, bei welchen die Strömungseintrittskante und ein daran angrenzender Bereich der Druck- und der Saugseite ohne Wärmedämmschicht ausgeführt sind.

Das Dokument EP-A-1 544 414 betrifft sogenannte Leitschaufelzwillinge für Turbinen mit kompletter Wärmedämmschicht, wobei im Bereich der Strömungskanalengstelle zwischen den beiden Schaufeln auf der Druck- und der Saugseite die Beschichtungsdicke reduziert ist.

Hiervon ausgehend liegt der vorliegenden Erfindung das Problem zu Grunde, eine neuartige Turbinenschaufel einer Gasturbine mit kompletter Wärmedämmschicht und variabler Schichtdicke zu schaffen.

Dieses Problem wird durch eine Turbinenschaufel gemäß Anspruch 1 gelöst. Bei dieser erstreckt sich die Wärmedämmschicht durchgehend bzw. ununterbrochen über die Saugseite und über die Druckseite der Oberfläche des Schaufelgrundkörpers, und zwar mit einer variablen bzw. veränderlichen Schichtdicke der Wärmedämmschicht.

Im Sinne der hier vorliegenden Erfindung wird eine Turbinenschaufel vorgeschlagen, deren Wärmedämmschicht an der Strömungseintrittskante eine maximale Schichtdicke aufweist, welche druckseitig zur Strömungsaustrittskante hin abnimmt und welche saugseitig zur Strömungsaustrittskante hin entweder abnimmt, oder zuerst ab- und dann wieder zunimmt.

Die Schichtdicke der Wärmedämmschicht kann so exakt an die unterschiedliche thermische Belastung der Oberflächenbereiche der Turbinenschaufel angepasst werden, und zwar ohne die Gefahr von Beschädigungen an Grenzflächen zwischen beschichteten und unbeschichteten Abschnitten der Oberfläche. Hierdurch kann die Lebensdauer von Turbinenschaufeln erhöht werden.

Vorzugsweise ist der Schaufelgrundkörper in seiner Oberflächenkontur im Bereich der Saugseite und der Druckseite an die variable bzw. veränderlichen Schichtdicke der Wärmedämmschicht derart angepasst, dass der Schaufelgrundkörper die variable bzw. veränderlichen Schichtdicke der Wärmedämmschicht kompensiert, sodass der Schaufelgrundkörper und die Wärmedämmschicht zusammen das gewünschte aerodynamisch Profil der Turbinenschaufel bereitstellen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

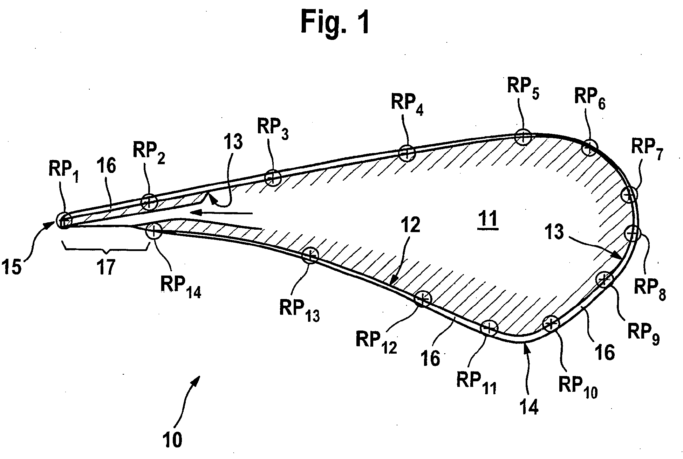

- Fig. 1: einen Querschnitt durch eine erfindungsgemäße Turbinenschaufel.

Nachfolgend wird die hier vorliegende Erfindung am Beispiel einer Turbinenschaufel 10 beschrieben, die als statorseitige Leitschaufel ausgebildet ist. Die Erfindung ist jedoch nicht auf statorseitige Leitschaufeln begrenzt, vielmehr kann die Erfindung auch an rotorseitigen Laufschaufeln einer Turbine zum Einsatz kommen.

Fig. 1 zeigt einen schematisierten Querschnitt durch eine als Leitschaufel ausgebildete Turbinenschaufel 10, wobei die Turbinenschaufel 10 einen Schaufelgrundkörper 11 umfasst, der eine äußere Oberfläche aufweist, wobei die äußere Oberfläche einerseits eine Druckseite 12 und andererseits eine Saugseite 13 bildet. Die Druckseite 12 sowie Saugseite 13 grenzen einerseits im Bereich einer Strömungseintrittskante 14 und andererseits im Bereich einer Strömungsaustrittskante 15 aneinander.

Der Schaufelgrundkörper 11 der Turbinenschaufel 10 ist an seiner äußeren Oberfläche mit einer Wärmedämmschicht 16 beschichtet, und zwar derart, dass sich die Wärmedämmschicht 16 durchgehend bzw. ununterbrochen zumindest größtenteils über den Bereich der Saugseite 13 und größtenteils über den Bereich der Druckseite 12 des Schaufelgrundkörpers 11 erstreckt, und zwar mit einer variablen bzw. veränderlichen Schichtdicke.

Der Schaufelgrundkörper 11 ist dabei in seiner Oberflächenkontur im Bereich der Saugseite 13 und der Druckseite 12 an die variable bzw. veränderliche Schichtdicke der Wännedämmschicht 16 derart angepasst, dass der Schaufelgrundkörper 11 die variable bzw. veränderliche Schichtdicke der Wärmedämmschicht 16 kompensiert. Das aerodynamisch gewünschte Profil der Turbinenschaufel 10 wird demnach erst durch das Zusammenspiel der Oberflächenkontur des Schaufelgrundkörpers 11 und der Wärmedämmschicht 16 mit variabler Schichtdicke bereitgestellt. Das gewünschte aerodynamische Profil der Turbinenschaufel 10 wird demnach erst mit dem Auftragen der Wärmedämmschicht 16 erzeugt.

Im Ausführungsbeispiel der Fig. 1, in welchem die Turbinenschaufel 10 als feststehende Leitschaufel ausgeführt ist, verfügt die Wärmedämmschicht 16 benachbart zur Strömungseintrittskante 14 über die größte Schichtdicke. Ausgehend von der Strömungseintrittskante 14 nimmt die Schichtdicke der Wärmedämmschicht 16 an der Druckseite 12 in Richtung auf die Strömungsaustrittskante 15 kontinuierlich ab, wobei vorzugsweise unmittelbar benachbart zur Strömungsaustrittskante 15 keine Wärmedämmschicht auf die Druckseite 12 aufgetragen ist, sodass in einem in der Regel mit Kühl-luftaustritten versehenen Abschnitt 17 der Druckseite 12 die Schichtdicke der Wärmedämmschicht 16 in etwa Null beträgt.

Ausgehend von der Strömungseintrittskante 14 nimmt die Schichtdicke der Wärmedämmschicht 16 an der Saugseite 13 zuerst kontinuierlich bis zu einer Engstelle des Strömungskanals ab und dann wieder kontinuierlich zu, sodass im gezeigten Ausführungsbeispiel die gesamte Saugseite 13 der Turbinenschaufel 10 mit einer Wärmedämmschicht 16 beschichtet ist. Im gezeigten Ausführungsbeispiel ist demnach bis auf den Abschnitt 17 der Druckseite 12 die komplette äußere Oberfläche des Schaufelgrundkörpers 11 der Turbinenschaufel 10 mit der Wärmedämmschicht 16 beschichtet, also durchgehend zwischen Saugseite 13 und Druckseite 12 mit einer variablen Schichtdicke.

In Fig. 1 sind an Saugseite 13 und Druckseite 12 eine Vielzahl von Referenzpositionen RP₁ bis RP₁₄ aufgetragen, für welche die nachfolgende Tabelle die bevorzugte Schichtdicke D der Wärmedämmschicht 16 in µm angibt.

| RP | RP₁ | RP₂ | RP₃ | RP₄ | RP₅ | RP₆ | RP₇ | RP₈ | RP₉ | RP₁₀ | RP₁₁ | RP₁₂ | RP₁₃ | RP₁₄ |
|---|---|---|---|---|---|---|---|---|---|---|---|---|---|---|
| D | 80 | 80 | 60 | 30 | 10 | 10 | 30 | 90 | 170 | 180 | 170 | 150 | 80 | < 1 |

Wie bereits ausgeführt, kann die Erfindung auch an Laufschaufeln einer Turbine zum Einsatz kommen.

## Patentansprüche

1. Turbinenschaufel einer Gasturbine, insbesondere eines Gasturbinenflugtriebwerks, mit einem eine äußere Oberfläche aufweisenden Schaufelgrundköper, wobei die äußere Oberfläche des Schaufelgrundkörpers eine Saugseite und eine Druckseite bildet, und wobei die komplette äußere Oberfläche des Schaufelgrundkörpers mit einer Wärmedämmschicht beschichtet ist, also durchgehend bzw. ununterbrochen über die Saugseite und über die Druckseite der Oberfläche des Schaufelgrundkörpers, wobei die Wärmedämmschicht (16) eine variable bzw. veränderliche Schichtdicke aufweist und die Wärmedämmschicht (16) benachbart zu einer Strömungseintrittskante (14) die größte Dicke aufweist, **dadurch gekennzeichnet, dass** ausgehend von der Strömungseintrittskante (14) die Dicke der Wärmedämmschicht (16) auf der Druckseite (13) in Richtung auf eine Strömungsaustrittskante (15) kontinuierlich abnimmt, und dass die Dicke der Wärmedämmschicht (16) auf der Saugseite (12) in Richtung auf die Strömungsaustrittskante (15) kontinuierlich abnimmt oder zuerst kontinuierlich abnimmt und dann wieder kontinuierlich zunimmt.

2. Turbinenschaufel nach Anspruch 1,
**dadurch gekennzeichnet,**
**dass** der Schaufelgrundkörper (11) in seiner Oberflächenkontur im Bereich der Saugseite und Druckseite an die variable bzw. veränderlichen Schichtdicke der Wärmedämmschicht (16) derart angepasst ist, dass der Schaufelgrundkörper (11) die variable bzw. veränderliche Schichtdicke der Wärmedämmschicht (16) kompensiert, sodass der Schaufelgrundkörper (11) und die Wärmedämmschicht (16) zusammen das gewünschte aerodynamisch Profil der Turbinenschaufel bereitstellen.

3. Turbinenschaufel nach Anspruch 1 oder 2,
**dadurch gekennzeichnet,**
**dass** dieselbe als Leitschaufel ausgebildet ist.

4. Turbinenschaufel nach einem der Ansprüche 1 bis 3,
**dadurch gekennzeichnet,**
**dass** die Dicke der Wärmedämmschicht (16) an der Druckseite (12) in einem Abschnitt (17) benachbart zur Strömungsaustrittskante (15) in etwa Null beträgt.

5. Turbinenschaufel nach einem der Ansprüche 1, 2 oder 4,
**dadurch gekennzeichnet,**
**dass** dieselbe als Laufschaufel ausgebildet ist.

## Claims

1. A turbine vane of a gas turbine, in particular of an aero gas turbine engine, with a base vane body having an exterior surface, wherein the exterior surface of the base vane body forms a suction side and a pressure side, and wherein the entire exterior surface of the base vane body is coated with an insulation layer, so a continuous and uninterrupted coating over the suction side and over the pressure side of the base vane body, wherein
the insulation layer (16) has a variable or changeable thickness, and wherein the insulation layer (16) has the greatest thickness adjacent to a leading flow edge (14),
**characterised in that**
originating from the leading flow edge (14) the thickness of the insulation layer (16) on the pressure side (13) continuously decreases in the direction of a trailing flow edge (15), and that the thickness of the insulation layer (16) on the suction side (12) continuously decreases or initially continuously decreases and then continuously increases again in the direction of the trailing flow edge (15).

2. The turbine vane according to claim 1,
**characterised in that**
the surface contours of the base vane body (11) in the suction side and pressure side area are adapted to the variable or changeable thickness of the insulation layer (16) such that the base vane body (11) compensates for the variable or changeable thickness of the insulation layer (16) so that the base vane body (11) and the insulation layer (16) together provide the desired aerodynamic profile for the turbine vane.

3. The turbine vane according to claim 1 or 2,
**characterised in that**
it is designed as a guide vane.

4. The turbine vane according to any of claims 1 to 3,
**characterised in that**
the thickness of the insulation layer (16) on the pressure side (12) in a section (17) adjacent to the trailing flow edge (15) is approximately zero.

5. The turbine vane according to any of claims 1, 2 or 4,
**characterised in that**
it is designed as a rotor blade.

## Revendications

1. Aube d'une turbine à gaz, en particulier d'un réacteur d'avion de turbine à gaz, comportant un corps de base d'aube présentant une surface extérieure, la surface extérieure du corps de base d'aube formant un côté aspiration et un côté compression et la totalité de la surface extérieure du corps de base d'aube étant revêtue d'une couche d'isolation thermique, donc continue ou ininterrompue sur le côté aspiration et sur le côté compression de la surface du corps de base d'aube, la couche d'isolation thermique (16) présentant une épaisseur de couche variable ou changeante et la couche d'isolation thermique (16) présentant la plus forte épaisseur à proximité de son bord d'entrée d'écoulement (14),
**caractérisée en ce que**,
à partir du bord d'entrée d'écoulement (14), l'épaisseur de couche d'isolation thermique (16) diminue en continu sur le côté compression (13) en direction d'un bord de sortie d'écoulement (15) et **en ce que** l'épaisseur de la couche d'isolation thermique (16) diminue en continu ou diminue d'abord en continu puis augmente à nouveau en continu sur le côté aspiration (12) en direction du bord de sortie d'écoulement (15).

2. Aube de turbine à gaz selon la revendication 1, **caractérisée en ce que**
le corps de base d'aube (11) est adapté dans son contour de surface, au niveau du côté aspiration et du côté compression, à l'épaisseur de couche variable ou changeante de la couche d'isolation thermique (16) de manière à ce que le corps de base d'aube (11) compense l'épaisseur de couche variable ou changeante de la couche d'isolation thermique (16), de sorte que le corps de base d'aube (11) et la couche d'isolation thermique (16) établissent conjointement le profil aérodynamique souhaité de l'aube de turbine.

3. Aube de turbine selon la revendication 1 ou 2, **caractérisée en ce que**
celle-ci est réalisée sous forme d'une aube directrice.

4. Aube de turbine selon une des revendications 1 à 3,
**caractérisée en ce que**
l'épaisseur de la couche d'isolation thermique (16) sur le côté compression (12), dans une section (17) voisine du bord de sortie d'écoulement (15), est approximativement égale à zéro.

5. Aube de turbine selon une des revendications 1, 2 ou 4,
**caractérisée en ce que**
celle-ci est réalisée sous forme d'une aube directrice.
